Europäisches Patentamt

European Patent Office

Office européen des brevets

(11) Publication number: **0 367 329**
**A1**

# EUROPEAN PATENT APPLICATION

(21) Application number: **89202655.0**

(51) Int. Cl.5: **G01L 5/28**

(22) Date of filing: **19.10.89**

(30) Priority: **31.10.88 NL 8802665**

(43) Date of publication of application:
**09.05.90 Bulletin 90/19**

(84) Designated Contracting States:
**BE DE ES FR GB IT NL SE**

(71) Applicant: **Sun Electric Systems B.V.**
**Nijverheidslaan 17**
**NL-1382 LG Weesp(NL)**

(72) Inventor: **Bovenlander, Johannes Peter**
**Boterbloemstraat 4**
**NL-1562 RX Krommenie(NL)**

(74) Representative: **Timmers, Cornelis Herman**
**Johannes et al**
**EXTERPATENT B.V. P.O. Box 90649**
**NL-2509 LP 's-Gravenhage(NL)**

(54) **Method and installation for testing an anti-lock and/or anti-skid system on a motor vehicle.**

(57) Method for testing an anti-lock and/or anti-skid system with wheel speed sensors and a signal processing and brake control system in which at least one of the vehicle wheels is supported on a rotary driven roller or roller pair, one supplies during the test the processing system for one or more wheels with speed simulation signals replacing the sensor signals and one detects the response of the anti-lock or anti-skid system exerted on this wheel during the actuation of the vehicle brake system.

EP 0 367 329 A1

## Method and installation for testing an anti-lock and/or anti-skid system on a motor vehicle.

The invention relates to a method according to the preamble of claim 1 and an installation according to the preamble of claim 7.

A procedure and installaiton of this type are known per se. The carrying out of this known method demands the use of a roller test bench which supports the four wheels of the vehicle to be tested and the rollers of which must be driven at high speed in order to be able to check the response of the anti-lock system on brakes at high vehicle speeds.

Of course, a roller test bench of this type demands an appreciable investment, in particular when the bench must be suitable for the testing of the anti-lock braking system of heavy freight vehicles. These investments are so high that a normal workshop cannot afford a "fast" roller test bench of this type.

The aim of the invention is to overcome this drawback and to provide a possibility for testing the complete anti-lock and/or anti-skid system using a simple bench, which may be slow. The procedure according to the invention is characterized for this purpose in that the processing and control system is fed during the test with speed simulation signals which replace the sensor signals.

With this procedure use can be made of a "half fast roller test bench on which, thus, only two wheels are supported while signals which simulate a high wheel speed are supplied to the processing and control system in place of the sensor signals from the other two wheels. However, it is also possible to use a "slow" roller test bench - with which two but possibly all wheels are supported - while signals which simulate a high wheel speed are supplied to the control system. It is easily possible to check whether the anti-lock system is working satisfactorily from the response of the control system during the operation of the vehicle brakes. In principle, the procedure can even be carried out when only one wheel is supported, the simulation signals then being used for the remaining wheels (or even all wheels).

The modern anti-skid systems can also be checked using the procedure according to the invention. For this purpose, the two driven wheels are supported on the rollers of a slow roller bench and signals which simulate an appreciably higher wheel speed are fed to the control system. When the simulation signal of one of the wheels is modified in such a way that a higher speed is simulated, the anti-skid system must react thereto by braking the wheel concerned.

It is also possible to modify the two simulation signals for the driven wheels transiently in such a way that a higher speed is simulated for the two wheels, corresponding to the situation in which the driven wheels "spin". The anti-skid system must react to this by reducing the drive on the rear wheels for example by influencing the connection between accelerator pedal and regulator. Whether or not such a reaction also actually takes place can also be checked visually or, for example, with the aid of recorders.

It is observed that US-A-4365333 describes a test generator for generating simulating signals to be supplied to the brake controller of a stationary railroad car. This gives only the possibility of checking whether or not this controller functions correctly whereas the method according to the invention allows the testing of a complete system with all its components.

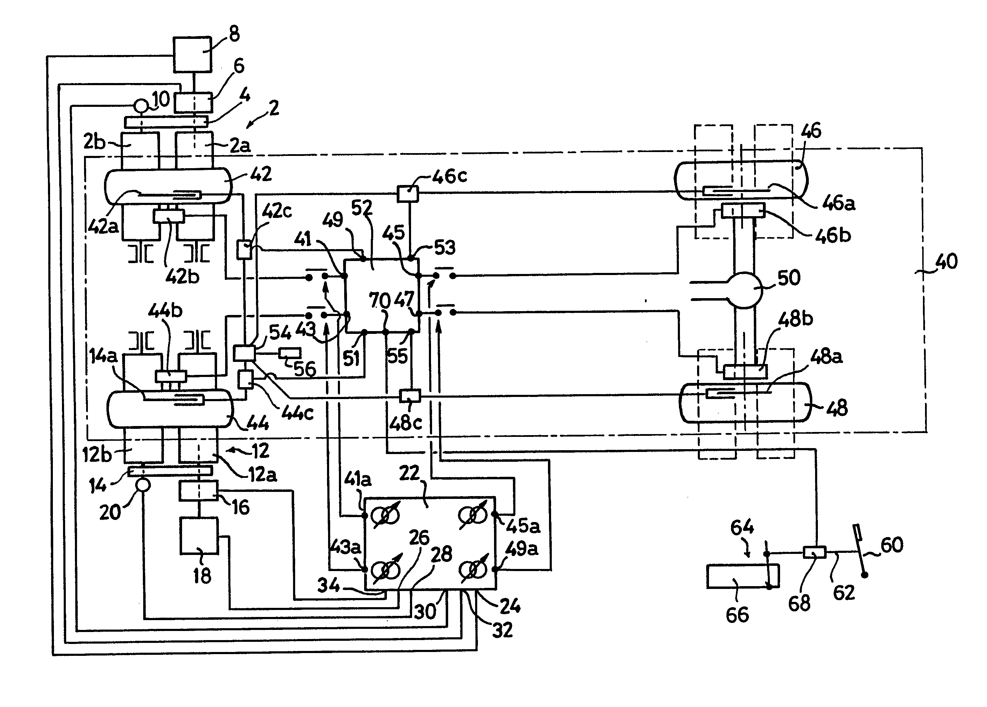

The method according to the invention is explained with the aid of the drawing. This shows schematically a roller test bench with a vehicle provided with an anti-lock and anti-skid system positioned with the front wheels on the bench.

The roller test bench shown comprises a first roller pair 2 with the rolers 2a, 2b coupled to one another by the drive belt 4 and connected via a torque meter 6 to the drive motor 8. The rotational speed of the rollers is measured by the tachogenerator coupled to the roller 2b.

In addition there is a second set of rollers 12 with rollers 12a, 12b coupled via the belt 14 and driven via the torque meter 16 by the motor 18; the roller speed is measured by the tachogenerator 20.

A control unit 22 located in the roller bench supplies control signals via the output 24 and 26 to the drive motors 8 and 18 respectively and receives, where appropriate, at the input 28 and 30 the signal from the tachogenerators 20 and 10 respectively representing the roller speed and, at the inputs 32 and 34 respectively, a drive torque measured by the torque meter 6 and 16 respectively and exerted by the rotors 8 and 18 respectively. A roller test bench designed in this way is generally known.

For example, the front wheels 42 and 44 of the vehicle 40 to be tested rest on the roller pair 2 and 12 respectively, and the stationary rear wheels 46 and 48 respectively rest on the ground. The rear wheels are driven by the differential 50. Each of the four wheels has a (disc) brake which is drawn schematically and is indicated by 42a for wheel 42, by 44a for wheel 44, by 46a for wheel 46 and by 48a for wheel 48. In addition, each wheel has a rotational speed sensor which is employed to supply a signal representing the wheel speed to the anti-lock system; these sensors are indicated by 42b for wheel 42, 44b for wheel 44, 46b for wheel 46 and 48b for wheel 48. The signals supplied by the sensors are normally fed to the inputs 41, 43, 45 and 47 of the central regulating and control unit 52 of the anti-lock and/or anti-skid system which, in response thereto, supplies control signals via the outputs 49, 51, 53 and 55 to the individual brake modulation units belonging to each wheel. These are indicated by 42c for wheel 42, 44c for wheel 44, 46c for wheel 46 and 48c for wheel 48. They modulate the supply of brake fluid from the brake unit 54 when this is actuated by the brake pedal 56.

When testing the anti-skid system, the driven wheels rest on the roller bench. Anti-skid systems of this type act, for example, in two ways; when the system detects that one of the driven wheels, for example wheel 46, slips during acceleration, the system reacts thereto by braking the relevant wheel. If the system detects that the two driven wheels slip, it then reacts thereto by "easing up on the accelerator", i.e. by reducing the supply of fuel to the engine. This can be effected in the manner indicated schematically in the figure. The accelerator pedal 60 is coupled via the coupling rod 62 to the actuating rod 64 of the regulator 66 (which, for example, can be the regulator of the injection pump of a diesel engine). A controllable element 68, which is variable in length, is incorporated in this connection 62 and is controlled from the output 70 of the central regulating and control unit 52. When "spinning" of the driven wheels is detected, the control unit 52 will supply a suitable control signal to the element 68 which will reduce the length thereof in such a way, that, despite the accelerator pedal 60 being depressed, less fuel is supplied to the vehicle engine than normally corresponds to the position of the accelerator pedal.

According to the invention, the control unit 22 of the roller bench can thus not only supply signals for controlling the drive motors 8 and 18 but, at its outputs 41a, 43a, 45a and 49a can also supply signals intended to be fed to the inputs 41, 43, 45 and 49 of the control unit 52 of the anti-lock and anti-skid system. These signals are in fact speed simulation signals and are supplied to the control unit 52 in place of the signals supplied by the wheel speed sensors, by which means a situation can be simulated which does not correspond to the actual situation but with which the functioning of the anti-lock and anti-skid system can be checked in a very simple and rapid manner using an inexpensive and slow roller bench. In the drawing, the way in which the connection between the respective speed sensors and the associated inputs of the control unit 52 can be broken is in said connection indicated by two points bridged by a horizontal dash over the top and the way in which simulation signals can be applied in place of speed sensor signals to the control unit 52 is indicated by the arrowed ends of the leads issuing from the outputs 41a-45a. With this arrangement the following possibilities arise:

The front wheels 42 and 44 can be placed on the roller pairs of a "fast" roller test bench and these wheels can be driven at a high speed. For correct checking of the anti-lock system, the rear wheels must then usually also be driven at comparable speeds and when a difference in speed is then created between one or more of the wheels, conclusions can be drawn from the response of the anti-lock system with regard to the good functioning thereof. With the method proposed according to the invention, the connection between the sensor 42b and the input 41 is left intact in this case, as is the connection between the sensor 44b and 43; however, the connection between the sensor 46b and 45 is broken as is that between the sensor 48b and the input 47. In place of the signals from the sensors 46b and 48b, simulation signals corresponding to those which are supplied by the sensors 46b, 48b at high speed are fed to the inputs 45 and 47 from the control unit 22. By varying these signals, the control unit 52 can be given the impression that differences in speed exist between one or more of the rear wheels and the front wheels and the response thereto by the anti-lock system on the wheels resting on the bench can be detected on actuating the brake pedal of the vehicle.

With the method according to the invention it is even no longer necessary to use a "fast" roller test bench. The connection between each of the respective sensors 42b-48b and the associated inputs 41-47 can be detached and an inexpensive, slow roller test bench used for testing. The wheels are then driven at low speed, while signals are fed to the control unit 52 which simulate an appreciably higher speed. By generating suitable differences between these signals, existing differences between the respective wheel speeds are simulated and when the vehicle brake is then actuated the way in which the anti-lock system of the vehicle reacts to these differences is immediately apparent from the measurements of the braking force.

The drawing shows only two roller pairs so that the test must be carried out separately for the front and rear wheels; however, it is clear that it is also possible to support all four wheels, as indicated schematically in the figure by broken lines, by which means the functioning of the anti-lock system can be checked very rapidly.

With the method according to the invention it is, of course, assumed that the wheel sensors which supply the wheel speed signals are functioning correctly. The functioning of the sensors can, of course, readily be checked when a fast bench is used, but a similar check is also possible when testing is carried out on a slow bench. The sensor output signal is, after all, an alternating voltage signal, the frequency of which is proportional to the speed of rotation of the particular wheel, and when using a slow bench an output signal is detected at low speeds of rotation it can be taken as certain that the sensors are functioning correctly.

The functioning of the increasingly used anti-skid system, which system uses the same wheel sensors as those which provide the signals for the anti-lock system, has already been explained in the preceding text. The correct functioning of this anti-skid system can also be checked using the method according to the invention. The driven wheels must then be supported on the rollers of a brake test bench, speed signals being supplied to the inputs 45 and 47 which represent a higher speed than the actual wheel speed. When one of the simulation signals changes such that a higher speed is temporarily simulated, the anti-skid system must react thereto by braking the wheel for which the speed is simulated and modified in the sense described above.

When the speed signals are simulated for the two or all driven wheels and both simulation speed signals are modified in the sense that a higher speed is simulated for these wheels (i.e. the situation of "spinning wheel"), the anti-skid system must react hereto by reducing the fuel supply to the engine. This response, which in the example described above consists in shortening of the coupling rod 62 between the accelerator pedal 60 and the regulating rod 64 by means of the element 68 can be checked visually or by other means. In this case it is not necessary for the vehicle to be on a roller bench.

## Claims

1. Method for testing an anti-lock and/or anti-skid system with wheel speed sensors and a signal processing and brake control system processing the signals supplied by said sensors, at least one of the vehicle wheels being supported on a rotary driven roller or roller pair and one detects the response of the anti-lock or anti-skid system exerted on this wheel during the actuation of the vehicle brake system, characterized in that one during the test supplies for one or more wheels the processing system with speed simulation signals replacing the sensor signals.

2. Method according to claim 1, characterized in that one drives the supported wheel at low speed and supplies the signal processing system with signals which simulate an appreciably higher speed.

3. Method according to claim 1-2, characterized in that one supports the wheels in pairs.

4. Method according to claim 1-2, characterized in that one supports all wheels.

5. Method according to claim 1-4, characterized in that, for testing the anti-skid system, one or more signals of the simulation signals representing the wheel speeds of driven wheels is made to simulate a higher speed than the remaining signals and one detects whether or not the wheel with which the first-mentioned signal or signals is or are associated is braked in response thereto.

6. Method for testing the anti-skid system using wheel speed sensors and a processing and control system processing the signals therefrom, characterized in that during the test the signal processing system is supplied with speed simulation signals replacing the sensor signals, the simulation signals representing the (two) wheel speeds of (one) driven wheel (pair) being made to simulate the speed which is higher than that of the other wheels and one detects the influence exerted as a reaction thereto by the anti-skid system on the control of the vehicle engine.

7. Installation for carrying out the method according to one or more of the preceding claims for testing an anti-lock and/or anti-skid system using speed sensors and a signal processing and control system processing the signals from said sensors, characterized by means for supplying the signal processing and control system with simulation signals replacing the sensor signals.

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 280 343 (SUN ELECTRIC SYSTEMS B.V.)<br>* Abstract; figure *<br>--- | 1-7 | G 01 L 5/28 |
| Y | US-A-4 365 333 (S.J. MULVEY)<br>* Abstract; column 1, lines 37-54;<br>column 2, lines 28-58; figure *<br>--- | 1-7 | |
| Y | US-A-3 907 380 (H. FLEISCHER et al.)<br>* Abstract *<br>--- | 1-7 | |
| A | FR-A-2 447 838 (WABCO FAHRZEUGBREMSEN GmbH)<br>* Whole document *<br>----- | 1,6,7 | |
| | | | TECHNICAL FIELDS SEARCHED (Int. Cl.5) |
| | | | G 01 L 5<br>B 60 T 8 |

The present search report has been drawn up for all claims

| Place of search | Date of completion of the search | Examiner |
|---|---|---|
| THE HAGUE | 02-02-1990 | VAN ASSCHE P.O. |